# EUROPEAN PATENT SPECIFICATION

(11) **EP 2 156 657 B1**
(45) Date of publication and mention of the grant of the patent: **10.11.2010**
(21) Application number: 07849195.8
(22) Date of filing: 20.11.2007
(51) Int. Cl.: H04N 5/232, G08B 13/196

(54) **REMOTE VIEWFINDING**
FERN-MOTIVSUCHE
VISEUR À DISTANCE

(30) Priority: 21.05.2007 US 751131
(43) Date of publication of application: 24.02.2010
(73) Proprietor: Sony Ericsson Mobile Communications AB, 221 88 Lund (SE)
(72) Inventor: HANSSON, Emil, 211 59 Malmö (SE); BENGTSSON, Karolina, SE-252 22 Helsingborg (SE); IMETS, Zoltan, SE-226 42 Lund (SE)
(74) Representative: VALEA AB
(86) International application number: PCT/IB2007/054715
(87) International publication number: WO 2008/142494

(56) References cited:
- WO-A-02/11431
- WO-A-2004/052224
- US-A1- 2006 183 971
- US-A1- 2007 265 495
- US-B1- 6 507 366

## Description

### BACKGROUND

Current surveillance cameras may be controlled remotely, e.g., via a mobile communication device, such as a mobile telephone. Such remote control of surveillance cameras may be referred to as "remote viewfinding." For example, Hutchison 3G UK Ltd. is promoting a surveillance camera called "Pupillo" that may be accessed by a mobile telephone. By pressing the mobile telephone's keypad (e.g., so that Dual-tone multi-frequency (DTMF) tones are transmitted), a user can control the direction of Pupillo's camera lens. Nokia offers an observation camera that can be controlled by sending a text message (e.g., a Short Message Service (SMS) message) via a mobile telephone.

### SUMMARY

According to one aspect, a method may include receiving video from a user device, the video providing an indication of user device motion, and determining movement of a camera, separate from the user device, based on the user device motion.

Additionally, the method may include extracting motion vectors from the video, analyzing the motion vectors, and determining movement of the camera based on the analyzed motion vectors.

Additionally, the method may include generating camera steering data based on the determined camera movement.

Additionally, the method may include operating the camera based on the camera steering data.

Additionally, the method may include operating the camera based on the determined camera movement.

Additionally, the method may include determining if a zoom operation is performed, calculating zoom direction and magnitude if a zoom operation is performed; and determining movement of the camera based on the calculated zoom direction and magnitude.

Additionally, the method may include generating camera steering data based on the determined camera movement.

Additionally, the method may include operating the camera based on the camera steering data.

Additionally, the method may include operating the camera based on the determined camera movement.

According to another aspect, a system may include one or more devices to receive video from a user device, determine user device motion based on the received video, and determine movement of a camera, separate from the user device, based on the user device motion.

Additionally, the one or more devices may be further configured to extract motion vectors from the video, analyze the motion vectors, and determine movement of the camera based on the analyzed motion vectors.

Additionally, the one or more devices may be further configured to generate camera steering data based on the determined camera movement.

Additionally, the one or more devices may be further configured to operate the camera based on the camera steering data.

Additionally, the one or more devices may be further configured to determine if a zoom operation is performed, calculate zoom direction and magnitude if a zoom operation is performed, and determine movement of the camera based on the calculated zoom direction and magnitude.

Additionally, the one or more devices may be further configured to generate camera steering data based on the determined camera movement.

Additionally, the one or more devices may be further configured to operate the camera based on the camera steering data.

According to yet another aspect, a system may include a user device to receive video that provides an indication of movement of the user device, and provide the video to a surveillance system to control the surveillance system based on the indicated user device movement provided by the video.

Additionally, the user device may include at least one of a telephone, a cellular phone, or a personal digital assistant (PDA).

Additionally, the video may include a compressed format.

Additionally, the video may include motion vectors used to determine the movement of the user device.

Additionally, the user device may further control movement of a camera of the surveillance system based on the indicated user device movement provided by the video.

Additionally, the user device may further detect a zoom operation based on the video.

Additionally, the user device may further receive information from the surveillance system that enables the user device to control the surveillance system.

According to a further aspect, a system may include one or more devices to receive video from a user device, determine user device motion based on the received video, and determine selection of a camera from a plurality of cameras, separate from the user device, based on the user device motion.

### BRIEF DESCRIPTION OF THE DRAWINGS

The accompanying drawings, which are incorporated in and constitute a part of this specification, illustrate one or more implementations described herein and, together with the description, explain these implementations. In the drawings:
Fig. 1 is an exemplary diagram of a network in which systems and methods described herein may be implemented;
Fig. 2 is an exemplary front view of a user device of Fig. 1;
Fig. 3 is a diagram of exemplary components of the user device of Figs. 1 and 2;
Fig. 4 is an exemplary diagram of a surveillance system of Fig. 1;
Fig. 5 is an exemplary diagram of a server of the surveillance system of Fig. 4;
Figs. 6A-6K are exemplary diagrams of interactions between the user device of Figs. 1-3 and a camera of the surveillance system of Fig. 4;
Figs. 7A-7G are diagrams of exemplary video that may be provided by the user device of Figs. 1-3 in order to control a camera of the surveillance system depicted in Fig. 4;
Fig. 8A is an exemplary diagram of interactions between the user device of Figs. 1-3 and a camera of the surveillance system of Fig. 4;
Figs. 8B-8D are exemplary diagrams of video generated by the user device of Figs. 1-3;
Figs. 8E-8G are exemplary diagrams of video captured by a camera of the surveillance system of Fig. 4, where the captured video of Figs. 8E-8G corresponds to the generated video of Figs. 8B-8D, respectively;
Fig. 9 is an exemplary diagram of an alternative surveillance system configuration; and
Figs. 10 and 11 depict flow charts of exemplary processes according to implementations described herein.

### DETAILED DESCRIPTION

The following detailed description refers to the accompanying drawings. The same reference numbers in different drawings may identify the same or similar elements. Also, the following detailed description does not limit the invention.

### OVERVIEW

Implementations described herein may provide a surveillance system (e.g., that includes a surveillance camera) that may be controlled based on movement of a user device. For example, in one implementation, a user device may generate video, and the video may be received by the surveillance system. The surveillance system may decode the received video, and may extract and analyze motions vectors from the decoded video. The surveillance system may detect zoom from the user device, and, if zoom exists, may calculate a direction and/or magnitude of the zoom. Camera movement may be determined by the surveillance system based on the motion vectors and/or the calculated direction and/or magnitude of the zoom (if it exists). The surveillance system may generate camera steering data based on the determined camera movement, and may control the surveillance camera based on the camera steering data.

### EXEMPLARY NETWORK CONFIGURATION

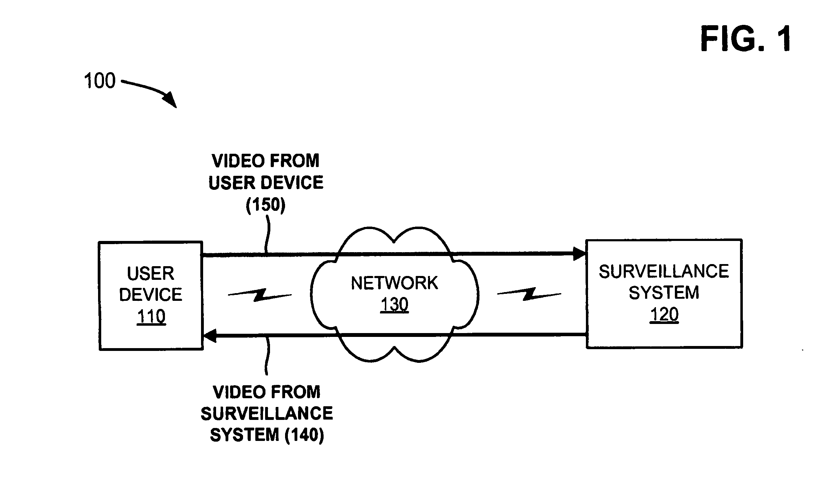

Fig. 1 is an exemplary diagram of a network 100 in which systems and methods described herein may be implemented. Network 100 may include a user device 110, and a surveillance system 120 connected via a network 130. One user device 110 and one surveillance system 120 have been illustrated as connected to network 130 for simplicity. In practice, there may be more user devices and/or surveillance systems. Also, in some instances, a user device may perform one or more functions of a surveillance system and a surveillance system may perform one or more functions of a user device.

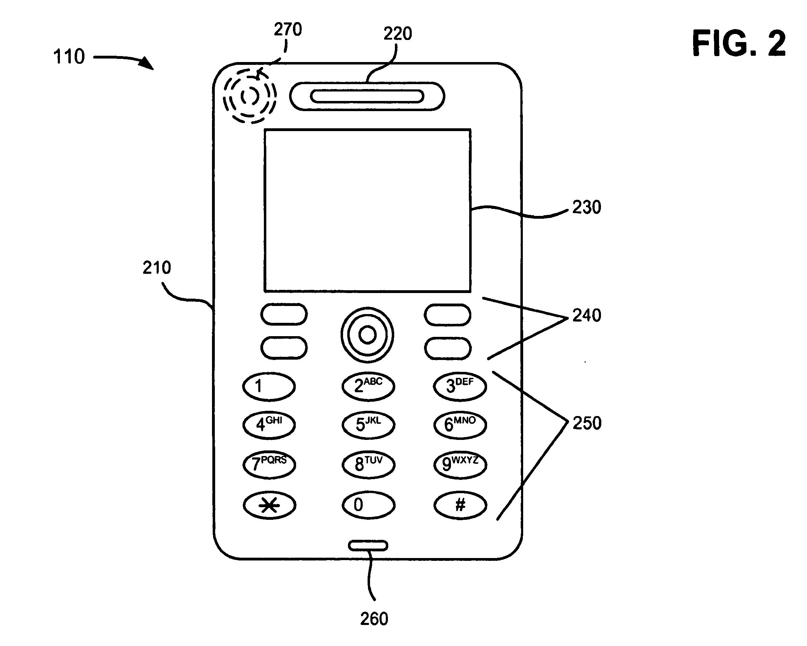

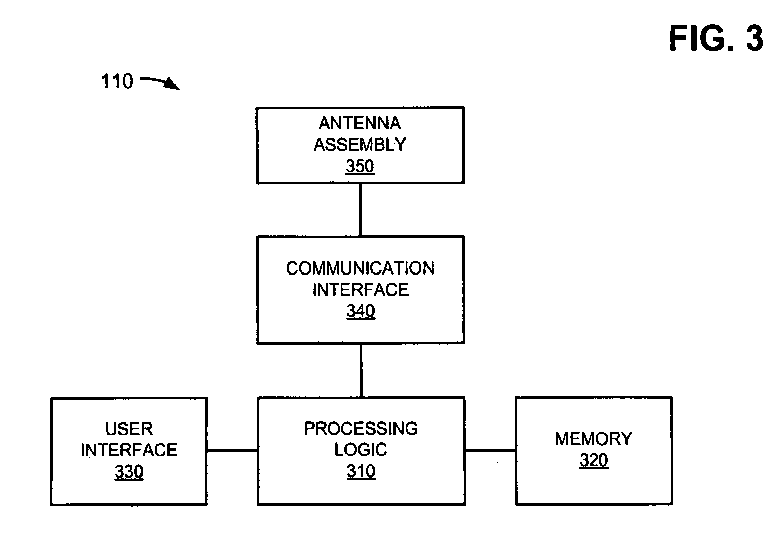

User device 110 may include one or more entities. An entity may be defined as a device, such as a telephone, a cellular phone, a personal digital assistant (PDA), or another type of computation or communication device, a thread or process running on one of these devices, and/or an object executable by one of these devices. In one implementation, user device 110 may control surveillance system 120 in a manner described herein. Further details of an exemplary embodiment of user device 110 are provided below in connection with Figs. 2 and 3.

In one exemplary implementation, user device 110 may communicate with surveillance system 120 using a 3G-324M protocol. 3G-324M is s 3rd Generation Partnership Project (3GPP) umbrella protocol for video telephony in 3GPP mobile networks. The 3G-324M protocol may operate over an established circuit switched connection between two communicating peers. 3G-324M may be based on the International Telecommunication Union Telecommunication Standardization Sector (ITU-T) H.324 specification for multimedia conferencing over circuit switched networks.

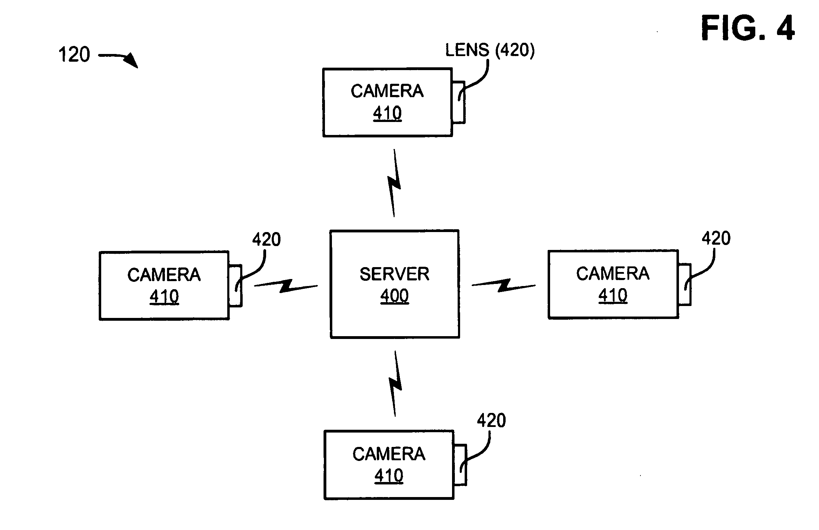

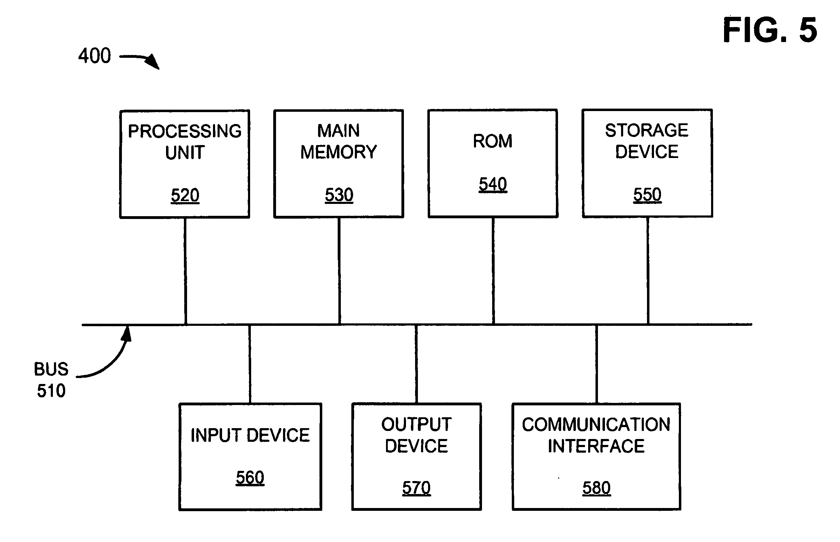

Surveillance system 120 may include any form (e.g., audio, visual, audio/visual, etc.) of system for observing and/or monitoring persons (e.g., employees, inmates, and/or any person capable of being identified by a surveillance system), places (e.g., buildings, roads, parking lots, and/or any place capable of being identified by a surveillance system), and/or things (e.g., animals, plants, trees, and/or any thing capable of being identified by a surveillance system). Surveillance system 120 may include, for example, one or more cameras for monitoring persons, places, and/or things; one or more microphones for monitoring persons, places, and/or things; one or more servers or other computing devices communicating with cameras and/or microphones; etc. Further details of an exemplary embodiment of surveillance system 120 are provided below in connection with Figs. 4 and 5.

Network 130 may include a local area network (LAN), a wide area network (WAN), a metropolitan area network (MAN), a telephone network, such as the Public Switched Telephone Network (PSTN) or a cellular telephone network, an intranet, the Internet, or a combination of networks. User device 110 and surveillance system 120 may connect to network 130 via wired and/or wireless connections.

In an exemplary operation, network 100 may enable surveillance system 120 to be controlled by user device 110 (e.g., via movement of and video generated by user device 110). Surveillance system 120 may generate video 140 of the person(s), place(s), and/or thing(s) under surveillance by surveillance system 120, and user device 110 may receive video 140 (e.g., video 140 may displayed on user device 110, as described below). User device 110 may include a mechanism (e.g., a camera) for capturing video 150, and video 150 may be used to provide an indication of movement of user device 110. Video 150 may be provided to and received by surveillance system 120, and may be used to control surveillance system 120. For example, in one implementation, the movement of user device 110 (as represented by video 150) may control operation of surveillance system 120 and/or may control video 140 captured by surveillance system 120.

Although Fig. 1 shows exemplary components of network 100, in other implementations, network 100 may contain fewer, different, or additional components than depicted in Fig. 1.

### EXEMPLARY USER DEVICE CONFIGURATION

Fig. 2 is an exemplary front view of user device 110 in one implementation described herein. As shown in Fig. 2, user device 110 may include a housing 210, a speaker 220, a display 230, control buttons 240, a keypad 250, a microphone 260, and/or a camera 270. Housing 210 may protect the components of user device 110 from outside elements. Speaker 220 may provide audible information to a user of user device 110.

Display 230 may provide visual information to the user. For example, display 230 may display text input into user device 110, text, images, video, and/or graphics received from another device, such as surveillance system 120, and/or information regarding incoming or outgoing calls or text messages, emails, media, games, phone books, address books, the current time, etc. Control buttons 240 may permit the user to interact with user device 110 to cause user device 110 to perform one or more operations. For example, control buttons 240 may be used to cause user device 110 to transmit information. Keypad 250 may include a standard telephone keypad. Microphone 260 may receive audible information from the user. Camera 270 may be provided on a back side of user device 110, and may enable user device 110 to capture and/or store video and/or images (e.g., pictures).

Although Fig. 2 shows exemplary components of user device 110, in other implementations, user device 110 may contain fewer, different, or additional components than depicted in Fig. 2. In still other implementations, one or more components of user device 110 may perform the tasks performed by one or more other components of user device 110.

Fig. 3 is a diagram of exemplary components of user device 110. As shown in Fig. 3, user device 110 may include processing logic 310, memory 320, a user interface 330, a communication interface 340, and/or an antenna assembly 350. Processing logic 310 may include a processor, a microprocessor, an application specific integrated circuit (ASIC), a field programmable gate array (FPGA), or the like. Processing logic 310 may control operation of user device 110 and its components. Memory 320 may include a random access memory (RAM), a read-only memory (ROM), and/or another type of memory to store data and instructions that may be used by processing logic 310.

User interface 330 may include mechanisms for inputting information to user device 110 and/or for outputting information from user device 110. Examples of input and output mechanisms might include buttons (e.g., control buttons 240, keys of keypad 250, a joystick, etc.) to permit data and control commands to be input into user device 110; a speaker (e.g., speaker 220) to receive electrical signals and output audio signals; a microphone (e.g., microphone 260) to receive audio signals and output electrical signals; a display (e.g., display 230) to output visual information (e.g., text input into user device 110); a vibrator to cause user device 110 to vibrate; and/or a camera (e.g., camera 270) to receive video and/or images.

Communication interface 340 may include, for example, a transmitter that may convert baseband signals from processing logic 310 to radio frequency (RF) signals and/or a receiver that may convert RF signals to baseband signals. Alternatively, communication interface 340 may include a transceiver to perform functions of both a transmitter and a receiver. Communication interface 340 may connect to antenna assembly 350 for transmission and/or reception of the RF signals. Antenna assembly 350 may include one or more antennas to transmit and/or receive RF signals over the air. Antenna assembly 350 may, for example, receive RF signals from communication interface 340 and transmit them over the air, and receive RF signals over the air and provide them to communication interface 340. In one implementation, for example, communication interface 340 may communicate with a network, such as network 130.

As will be described in detail below, user device 110 may perform certain operations in response to processing logic 310 executing software instructions of an application contained in a computer-readable medium, such as memory 320. A computer-readable medium may be defined as a physical or logical memory device and/or carrier wave. The software instructions may be read into memory 320 from another computer-readable medium or from another device via communication interface 340. The software instructions contained in memory 320 may cause processing logic 310 to perform processes that will be described later. Alternatively, hardwired circuitry may be used in place of or in combination with software instructions to implement processes described herein. Thus, implementations described herein are not limited to any specific combination of hardware circuitry and software.

Although Fig. 3 shows exemplary components of user device 110, in other implementations, user device 110 may contain fewer, different, or additional components than depicted in Fig. 3. In still other implementations, one or more components of user device 110 may perform the tasks performed by one or more other components of user device 110.

### EXEMPLARY SURVEILLANCE SYSTEM CONFIGURATION

Fig. 4 is an exemplary diagram of surveillance system 120. As illustrated, surveillance system 120 may include a server 400 and one or more cameras 410. In one implementation, server 400 and cameras 410 may connect to a network (not shown) via wired and/or wireless connections. The network may include any of the networks described above in connection with network 130. In other implementations, server 400 may connect directly to cameras 410 via wired and/or wireless connections.

Server 400 may include a computing device, such as a general purpose computer, a personal computer (PC), a laptop, or another type of computation or communication device, a thread or process running on one of these devices, and/or an object executable by one of these devices. Server 400 may gather, process, search, and/or provide information in a manner described herein. For example, in one implementation, server 400 may receive audio, video, images, etc. captured by one or more of cameras 410, may control operation (e.g., movement, activation, deactivation, etc.) of one or more of cameras 410, and/or may communicate with user device 110 (e.g., via network 130) to enable user device 110 to control operation of one or more of cameras 410, as described herein.

Each camera 410 may include a device that may capture and store audio, images, and/or video. Each camera 410 may include a lens 420 for capturing images and/or video, and may include an optical zoom portion. As used herein, an "optical zoom portion" may include a mechanically, electrically, and/or electromechanically controlled assembly of lens(es) whose focal length may be changed, as opposed to a prime lens, which may have a fixed focal length. "Zoom lenses" may be described by the ratio of their longest and shortest focal lengths. For example, a zoom lens with focal lengths ranging from 100 millimeters (mm) to 400 mm may be described as a "4x" zoom. Zoom lenses may range, for example, from more than about "lx" to about "12x".

In one implementation, movement of user device 110 may be used to control movement of one or more of cameras 410. For example, a user of user device 110 may select (e.g., with user device 110) a specific camera 410 of surveillance system 120, and may move user device 110 in order to control movement of the selected camera 410. In another example, the user may select (e.g., with user device 110) other cameras 410 of surveillance system 120, and may move user device 110 in order control movement of the other cameras 410.

Although Fig. 4 shows exemplary components of surveillance system 120, in other implementations, surveillance system 120 may contain fewer, different, or additional components than depicted in Fig. 4. In still other implementations, one or more components of surveillance system 120 may perform the tasks performed by one or more other components of surveillance system 120.

Fig. 5 is an exemplary diagram of server 400. As illustrated, server 400 may include a bus 510, a processing unit 520, a main memory 530, a read-only memory (ROM) 540, a storage device 550, an input device 560, an output device 570, and/or a communication interface 580. Bus 510 may include a path that permits communication among the components of server 400.

Processing unit 520 may include a processor, microprocessor, or other type of processing logic that may interpret and execute instructions. Main memory 530 may include a random access memory (RAM) or another type of dynamic storage device that may store information and instructions for execution by processing unit 520. ROM 540 may include a ROM device or another type of static storage device that may store static information and/or instructions for use by processing unit 520. Storage device 550 may include a magnetic and/or optical recording medium and its corresponding drive.

Input device 560 may include a mechanism that permits an operator to input information to server 400, such as a keyboard, a mouse, a pen, a microphone, voice recognition and/or biometric mechanisms, etc. Output device 570 may include a mechanism that outputs information to the operator, including a display, a printer, a speaker, etc. Communication interface 580 may include any transceiver-like mechanism that enables server 400 to communicate with other devices and/or systems. For example, communication interface 580 may include mechanisms for communicating with another device or system via a network, such as network 130.

As will be described in detail below, server 400 may perform certain operations in response to processing unit 520 executing software instructions contained in a computer-readable medium, such as main memory 530. The software instructions may be read into main memory 530 from another computer-readable medium, such as storage device 550, or from another device via communication interface 580. The software instructions contained in main memory 530 may cause processing unit 520 to perform processes that will be described later. Alternatively, hardwired circuitry may be used in place of or in combination with software instructions to implement processes described herein. Thus, implementations described herein are not limited to any specific combination of hardware circuitry and software.

Although Fig. 5 shows exemplary components of server 400, in other implementations, server 400 may contain fewer, different, or additional components than depicted in Fig. 5. In still other implementations, one or more components of server 400 may perform the tasks performed by one or more other components of server 400.

### EXEMPLARY INTERACTION BETWEEN USER DEVICE AND CAMERA

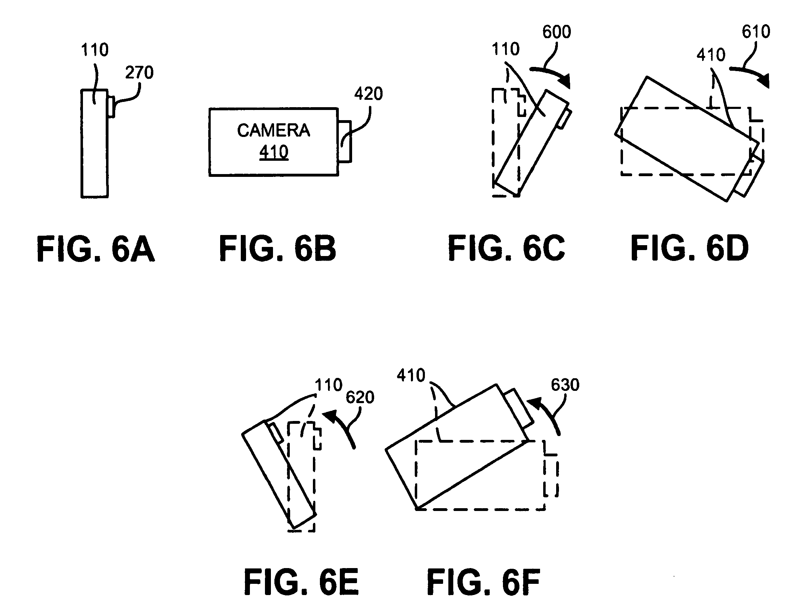

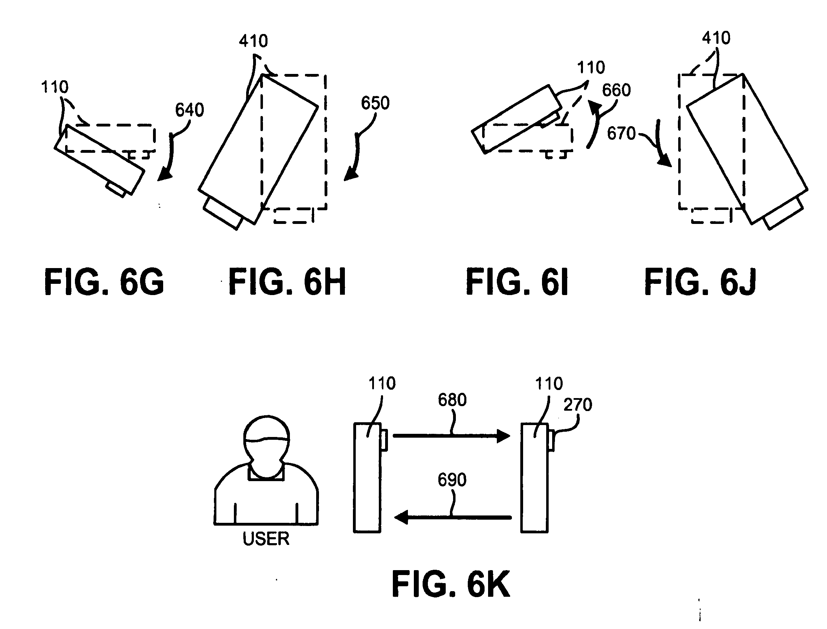

Figs. 6A-6K are exemplary diagrams of interactions between user device 110 and camera 410 of surveillance system 120. For example, Figs. 6A-6K depict exemplary implementations of how movement of user device 110 may control or effect movement of camera 410. Figs. 6A-6F and 6K are side views of user device 110 and/or camera 410, and Figs. 6G-6J are top views of user device 110 and/or camera 410.

As shown in Figs. 6A and 6B, if user device 110 is stationary, camera 410 may be stationary as well. For example, if camera 410 is viewing a particular person, place, and/or thing, camera 410 may continue to view the particular person, place, and/or thing. As shown in Figs. 6C and 6D, if user device 110 is moved in a downward direction 600, camera 410 may move downward in a corresponding downward direction 610. As shown in Figs. 6E and 6F, if user device 110 is moved in an upward direction 620, camera 410 may move upward in a corresponding upward direction 630.

As shown in Figs. 6G and 6H, if user device 110 is rotated in a direction 640, camera 410 may rotate in a corresponding direction 650. As shown in Figs. 6I and 6J, if user device 110 is rotated in a direction 660 (e.g., a direction opposite to direction 640), camera 410 may rotate in a corresponding direction 670 (e.g., a direction opposite to direction 650). As shown in Fig. 6K, user device 110 may be moved in a direction 680 away from a user, and/or in a direction 690 toward the user. If user device 110 is moved in direction 680 away from the user, camera 410 (now shown) may perform a zoom in operation (e.g., on a person(s), place(s), thing(s), etc.). If user device 110 is moved in direction 690 toward the user, camera 410 may perform a zoom out operation. Alternatively and/or additionally, a zoom feature of camera 270 of user device 110 may be used to cause camera 410 to perform zoom in and/or out operations.

Although Figs. 6A-6K show exemplary interactions between user device 110 and camera 410, in other implementations, user device 110 and camera 410 may include fewer, different, or additional interactions than depicted in Figs. 6A-6K. For example, user device 110 may include any degree of motion throughout a three-dimensional space (e.g., x, y, and z axes) around user device 110, and camera 410 may include any degree of motion throughout a three-dimensional space around camera 410. In still other implementations, the degree of motion of user device 110 may correspond to the degree of motion of camera 410. For example, if user device 110 is rotated ten degrees downward, camera 410 may be rotated ten degrees (or some predetermined portion of ten degrees) downward.

### EXEMPLARY USER DEVICE VIDEO

Modem video codec (compression/decompression) algorithms may use motion compensation as a compression technique. For example, such algorithms may utilize the fact that consecutive video frames may contain a portion of the same information. Differences between video frames may be referred to as "motion vectors." Motion vectors may be used if the video is decoded in order to reconstruct movement or a delta between video frames. If a video call (e.g., video 150) is provided by user device 110 to surveillance system 120, surveillance system 120 may use motion vectors (e.g., provided by video 150) as a method for controlling one or more cameras 410 of surveillance system 120.

If a user moves user device 110, user device 110 may provide video 150 representative of the movement of user device 110. Surveillance system 120 (e.g., server 400) may receive and decode video 150, and may extract motion vectors (e.g., provided by video 150) corresponding to the movement of user device 110. In one implementation, video 150 may be provided in a compressed format, and surveillance system 120 may decode video 150 by decompressing video 150 from the compressed format.

Instead of using the motion vectors for recreating video, surveillance system 120 may use the motion vectors to apply the same movement (e.g., as user device 110) for one or more cameras 410. For example, if the user pans right with user device 110, camera 410 may pan right. In another example, if the user zooms in with user device 110 and/or moves user device 110 away from him/her, camera 410 may zoom in correspondingly. Such an arrangement may provide a form of true remote viewfinding, e.g., an intuitive and easy way to control a remote camera (e.g., camera 410).

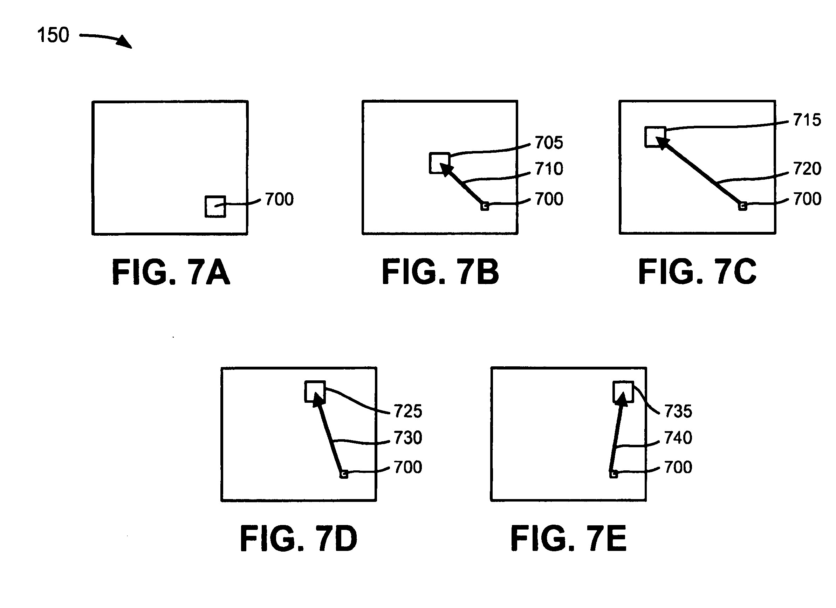

Figs. 7A-7G are diagrams of exemplary video (e.g., video 150) that may be provided by user device 110 in order to control camera 410 of surveillance system 120. In one exemplary implementation, video 150 may be provided in a compressed format (e.g., an intraframe format). Intraframe is a video compression method used by the Moving Picture Experts Group (MPEG) standard. In a motion sequence, individual frames of pictures may be grouped together (called a group of pictures or "GOP") and may be played back so that a device (e.g., user device 110) may register the video's spatial motion. An I-frame may include a single frame of digital content that a compressor examines independent of frames that precede and follow it, and may store data needed to display that frame. I-frames may be interspersed with predictive frames (P-frames) and bi-directional frames (B-frames) in a compressed video. As shown in Fig. 7A, video 150 may include a keyframe or I-frame that provides a reference point 700, which may correspond to one or more features (e.g., pixel regions within an image) of an image captured by video 150.

As shown in Fig. 7B, the one or more features captured by video 150 may move to a point 705 away from reference point 700, and a motion vector 710 may be calculated based on the movement from reference point 700 to point 705. As shown in Fig. 7C, the one or more features captured by video 150 may move to a point 715 away from reference point 700, and a motion vector 720 may be calculated based on the movement from reference point 700 to point 715. As shown in Fig. 7D, the one or more features captured by video 150 may to a point 725 away from reference point 700, and a motion vector 730 may be calculated based on the movement from reference point 700 to point 725. As shown in Fig. 7E, the one or more features captured by video 150 may to a point 735 away from reference point 700, and a motion vector 740 may be calculated based on the movement from reference point 700 to point 735.

To find motion or movement from frame to frame, motion vectors in a previous frame may be subtracted from motion vectors in a current or present frame. For example, in order to find movement from Fig. 7B to Fig. 7C (e.g., where Fig. 7C represents a present frame, and Fig. 7B represents a previous frame) motion vector 710 may be subtracted from motion vector 720. The motion vectors of Figs. 7B-7E may be analyzed if the video (e.g., video 150) is decoding, and may describe movement relative to the I-frame (e.g., Fig. 7A).

In one implementation, surveillance system 120 (e.g., server 400) may extract the motion vectors (e.g., motion vectors 710, 720, 730, and/or 740) from video 150, and may analyze the extracted motion vectors. For example, surveillance system 120 may determine the movement from frame to frame of video 150 by subtracting motion vectors in a previous frame from motion vectors in a present frame.

In another implementation, surveillance system 120 (e.g., server 400) may determine movement of one or more of cameras 410 based on the analysis of the extracted motion vectors. For example, surveillance system 120 may determine whether camera 410 may pan to the right, pan to the left, tilt upwards, tilt downwards, rotate clockwise, rotate counterclockwise, etc. based on the analysis of the motion vectors.

In still another implementation, surveillance system 120 (e.g., server 400) may generate camera steering data which may correspond to the determined movement. The camera steering data may include data, information, instructions, etc. that may be used to steer the movement of camera 410. Predetermined thresholds may be set for the camera steering data by server 400 in order to prevent erratic movement of cameras 410. For example, if user device 110 is moved erratically (e.g., a user drops user device 110), the predetermined thresholds may prevent any erratic movement of cameras 410 that may be caused by such an event. Server 400 may provide the camera steering data to a selected one of cameras 410. The selected camera 410 may receive the camera steering data from server 400, and may move in accordance with the information provided by the camera steering data.

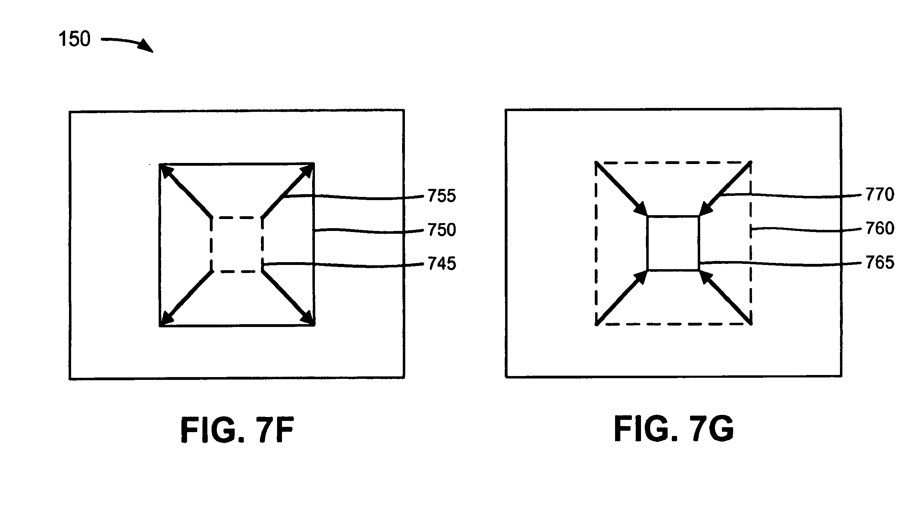

As shown in Fig. 7F, video 150 may include a reference image 745 captured by user device 110. If a user of user device 110 zooms in on reference image 745 (e.g., if user device 110 is moved in direction 680 away from the user, camera 410 (now shown) may perform a zoom in operation, as described above in connection with Fig. 6K), reference image 745 may expand to an image 750. Motion vectors 755 may form outwards from a center portion of reference image 745, and may be used to detect the zoom and to calculate a direction and/or a magnitude of the zoom.

As shown in Fig. 7G, video 150 may include a reference image 760 captured by user device 110. If a user of user device 110 zooms out from reference image 760 (e.g., if user device 110 is moved in direction 690 toward the user, camera 410 may perform a zoom out operation, as described above in connection with Fig. 6K), reference image 760 may compress to an image 765. Motion vectors 770 may form inwards toward a center portion of image 765, and may be used to detect the zoom and calculate a magnitude and/or direction of the zoom.

In one implementation, surveillance system 120 (e.g., server 400) may determine if zoom exists in video 150, and may calculate the zoom direction and/or magnitude based on the motion vectors (e.g., motion vectors 755 and/or 770) from video 150. For example, if user device 110 zooms in or out, motion vectors 755 or 770, respectively, may form and may be used by surveillance system 120 to determine that zoom exists. Surveillance system 120 may calculate the zoom direction and/or magnitude based on the direction and/or magnitude of motion vectors 755 or 770.

In another implementation, surveillance system 120 (e.g., server 400) may determine movement of one or more of cameras 410 based on the calculated zoom direction and/or magnitude. For example, surveillance system 120 may determine whether camera 410 may zoom in or zoom out based on the calculated zoom direction and/or magnitude.

In still another implementation, surveillance system 120 (e.g., server 400) may generate camera steering data which may correspond to the determined movement. The camera steering data may include data, information, instructions, etc. that may be used to steer the movement of camera 410. Predetermined thresholds for the camera steering data may be set by server 400 in order to prevent erratic movement of cameras 410. Server 400 may provide the camera steering data to a selected one of cameras 410. The selected camera 410 may receive the camera steering data from server 400, and may move in accordance with the information provided by the camera steering data.

Although Figs. 7A-7G show exemplary video that may be provided by user device 110, in other implementations, user device 110 may provide fewer, different, or additional video than depicted in Figs. 7A-7G.

### EXEMPLARY OPERATION OF USER DEVICE AND SURVEILLANCE SYSTEM

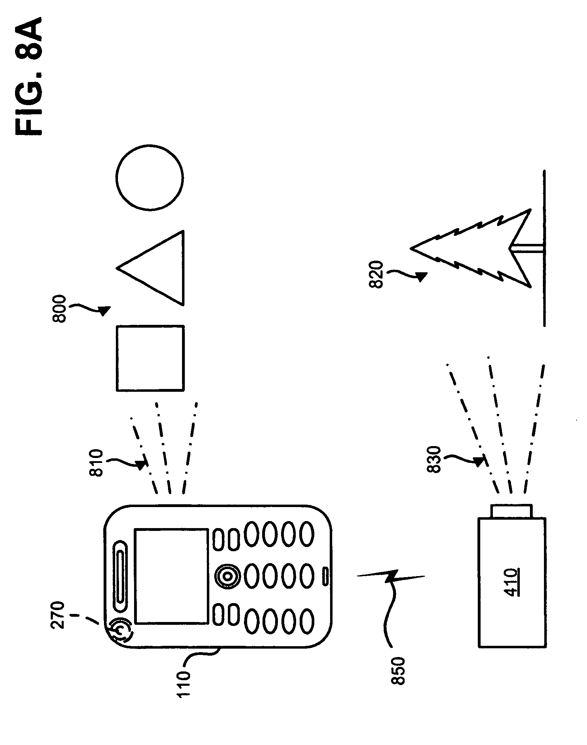

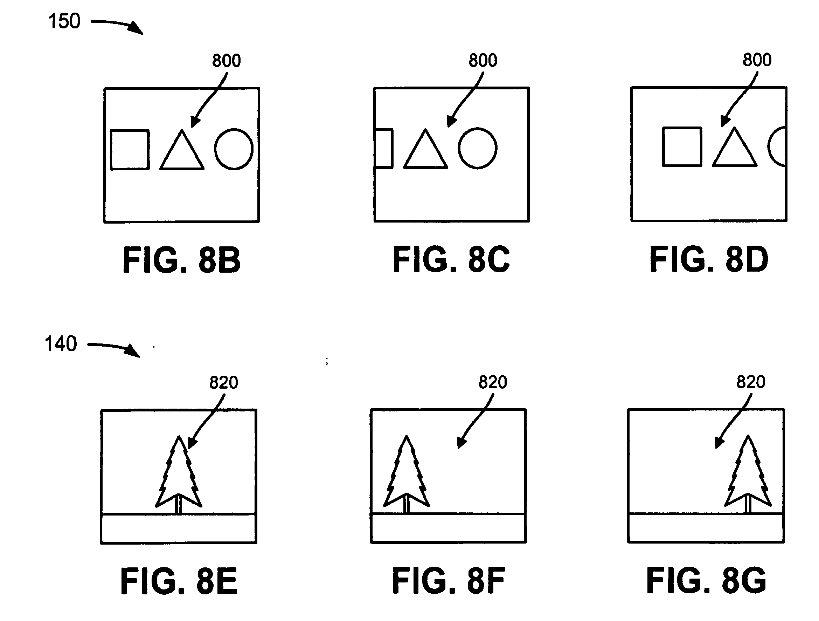

Fig. 8A is an exemplary diagram of interactions between user device 110 and one of cameras 410 of surveillance system 120. As illustrated, camera 270 of user device 110 may capture an image(s) of an object 800 (e.g., via a field of view 810 of camera 270) in the form of a video (e.g., video 150). Camera 410 of surveillance system 120 may capture an image(s) of an object 820 (e.g., via a field of view 830 of camera 410) in the form of a video (e.g., video 140). User device 110 may communicate video 150 to camera 410 via a link 850 (e.g., via network 130 and/or server 400), and video 150 may be used by server 400 of surveillance system 120 to control video 140 captured by camera 410.
Figs. 8B-8D are exemplary diagrams of video 150 generated by user device 110. Figs. 8E-8G are exemplary diagrams of video 140 captured by camera 410 of surveillance system 120, where the captured video 140 of Figs. 8E-8G corresponds to the generated video 140 of Figs. 8B-8D, respectively. Video 140 may be captured by camera 410 and provided to user device 110 for display (e.g., by display 230 of user device 110). Video 150 may be captured by user device 110, and may be provided to server 400 of surveillance system 120 in order control one or more cameras 410, as described herein.

As shown in Figs. 8B and 8E, video 150 generated by user device 110 may be centered on object 800, which may cause video 140 captured by camera 410 to be centered on object 820. As shown in Figs. 8C and 8F, video 150 generated by user device 110 may pan to right of object 800, which may cause video 140 captured by camera 410 to pan to the right of object 820. As shown in Figs. 8D and 8E, video 150 generated by user device 110 may pan to the left of object 800, which may cause video 140 captured by camera 410 to pan to the left of object 820. Although not shown in Figs. 8A-8G, video 150 of user device 110 may zoom in or out of object 800, may pan above or below object 800, etc., which may cause video 140 captured by camera 410 to perform a corresponding movement(s).

Although Figs. 8B-8G show exemplary video that may be provided by user device 110 and/or camera 410, in other implementations, user device 110 and/or camera 410 may provide fewer, different, or additional video than depicted in Figs. 8B-8G.

### ALTERNATIVE SURVEILLANCE SYSTEM CONFIGURATIONS

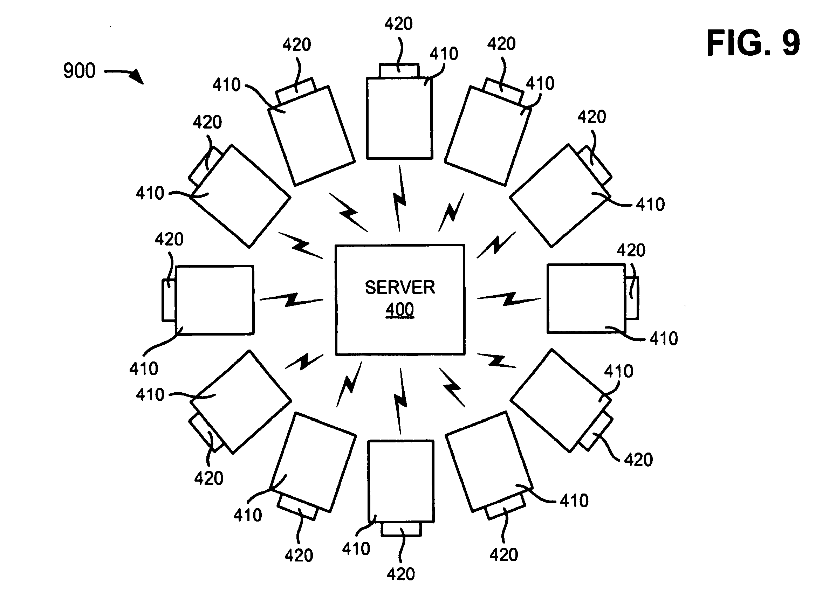

Fig. 9 is an exemplary diagram of an alternative surveillance system configuration 900. As illustrated, alternative surveillance system 900 may include multiple cameras 410 (with corresponding lenses 420) arranged in a circular manner. Cameras 410 may perform the tasks described above in connection with Fig. 4, and may connect to server 400 via wired and/or wireless connections. Server 400 may perform the tasks described above in connection with Fig. 4.

However, alternative surveillance system 900 may be static, i.e., without any mechanically moving components. For example, cameras 410 may be arranged in a circular manner with overlapping views of coverage. Server 400 may decide and select from which camera to take a picture depending on the motion vector derived from the incoming video (e.g., video 150 from user device 110). Alternatively, a single surveillance camera may be provided in system 900, and may include a high resolution and a special lens that may provide full coverage of a surveillance area. Server 400 may produce video (e.g., video 140) from a small portion of what the single surveillance camera may normally deliver based on the motion vector derived from the incoming video (e.g., video 150 from user device 110). In such arrangements, alternative surveillance system 900 may simulate movement of cameras 410 in any direction and may digitally perform zoom operations.

### EXEMPLARY PROCESSES

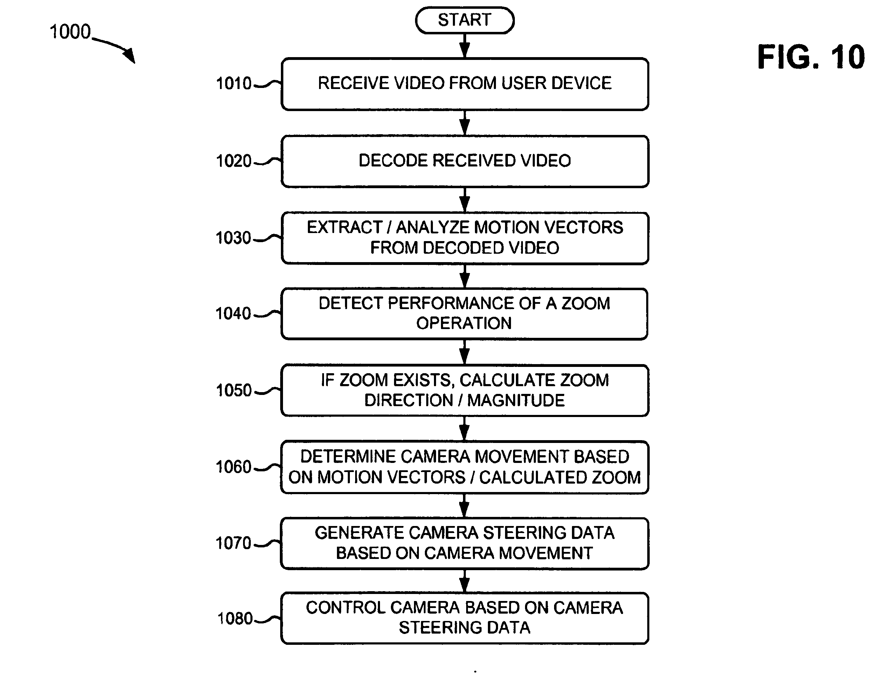

Fig. 10 depicts a flow chart of an exemplary processes 1000 according to implementations described herein. In one implementation, process 1000 may be performed by hardware and/or software components of surveillance system 120 (e.g., server 400). In other implementations, process 1000 may be performed by hardware and/or software components of surveillance system 120 (e.g., server 400) in combination with hardware and/or software components of user device 110. As shown, process 1000 may begin with receipt of video from a user device (block 1010) and decoding of the received video (block 1020). For example, in one implementation, if a user moves user device 110, user device 110 may provide video 150 representative of the movement of user device 110. Surveillance system 120 (e.g., server 400) may receive and decode video 150. In one example, video 150 may be provided in a compressed format, and surveillance system 120 (e.g., server 400) may decode video 150 by decompressing video 150 from the compressed format.

Motion vectors may be extracted and/or analyzed from the decoded video (block 1030). For example, in one implementation described above in connection with Figs. 7A-7E, surveillance system 120 (e.g., server 400) may extract the motion vectors (e.g., motion vectors 710, 720, 730, and/or 740) from video 150, and may analyze the extracted motion vectors. In one example, surveillance system 120 (e.g., server 400) may determine the movement from frame to frame of video 150 by subtracting motion vectors in a previous frame from motion vectors in a present frame.

As further shown in Fig. 10, performance of a zoom operation may be detected (block 1040), and, if the zoom operation is detected, a direction and/or magnitude of the zoom operation may be calculated (block 1050). For example, in one implementation described above in connection with Figs. 7F and 7G, surveillance system 120 (e.g., server 400) may determine if zoom exists in video 150, and may calculate the zoom direction and/or magnitude based on the motion vectors (e.g., motion vectors 755 and/or 770) from video 150. In one example, if user device 110 zooms in or out, motion vectors 755 or 770, respectively, may form and may be used by surveillance system 120 to determine that zoom exists. Surveillance system 120 may calculate the zoom direction and/or magnitude based on the direction and/or magnitude of motion vectors 755 or 770.

Movement of a camera may be determined based on the analysis of the extracted motion vectors and/or the calculated direction and/or magnitude of the zoom (block 1060). For example, in one implementation described above in connection with Figs. 7A-7E, surveillance system 120 (e.g., server 400) may determine movement (e.g., pan to the right, pan to the left, tilt upwards, tilt downwards, rotate clockwise, rotate counterclockwise, etc.) of one or more of cameras 410 based on the analysis of the extracted motion vectors. In another implementation described above in connection with Figs. 7F and 7G, surveillance system 120 (e.g., server 400) may determine movement of one or more of cameras 410 based on the calculated zoom direction and/or magnitude.

As further shown in Fig. 10, camera steering data may be generated based on the determined camera movement (block 1070). For example, in one implementation described above in connection with Figs. 7A-7G, surveillance system 120 (e.g., server 400) may generate camera steering data which may correspond to the determined movement. The camera steering data may include data, information, instructions, etc. that may be used to steer the movement of camera 410. Predetermined thresholds for the camera steering data may be set by server 400 in order to prevent erratic movement of cameras 410.

The camera may be controlled based on the camera steering data (block 1080). For example, in one implementation described above in connection with Figs. 7A-7G, surveillance system 120 (e.g., server 400) may provide the camera steering data to a selected one of cameras 410. The selected camera 410 may receive the camera steering data from server 400, and may move in accordance with the information provided by the camera steering data.

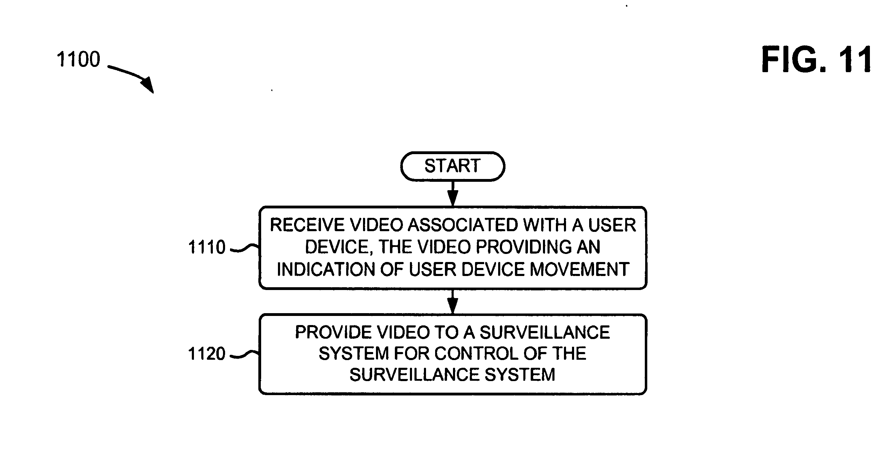

Fig. 11 depicts a flow chart of an exemplary processes 1100 according to implementations described herein. In one implementation, process 1100 may be performed by hardware and/or software components of user device 110. In other implementations, process 1100 may be performed by hardware and/or software components of user device 110 in combination with hardware and/or software components of surveillance system 120 (e.g., server 400). As shown, process 1100 may begin with receipt of video associated with a user device, where the video may provide an indication of movement of the user device (block 1110). For example, in one implementation as described above in connection with Figs. 1 and 2, user device 110 may include a mechanism (e.g., camera 270) for capturing video 150, and video 150 may be used to provide an indication of movement of user device 110.

As further shown in Fig. 11, video may be provided to a surveillance system and may be used to control the surveillance system (block 1120). For example, in one implementation described above in connection with Fig. 1, video 150 may be provided to and received by surveillance system 120, and may be used to control surveillance system 120. In one example, the movement of device (as represented by video 150) may be used to control operation of and/or video 140 captured by surveillance system 120. In another example, control of surveillance system 120 based on video 150 may include the tasks described above in connection with Fig. 10 (e.g., blocks 1020-1080 of Fig. 10).

### CONCLUSION

Implementations described herein may provide a surveillance system that may be controlled based on movement of a user device. For example, in one implementation, a user device may generate video, and the video may be received by the surveillance system. The surveillance system may decode the received video, and may extract and analyze motions vectors from the decoded video. The surveillance system may detect zoom from the user device, and, if zoom exists, may calculate a direction and/or magnitude of the zoom. Surveillance camera movement may be determined by the surveillance system based on the motion vectors and/or the calculated direction and/or magnitude of the zoom (if it exists). The surveillance system may generate camera steering data based on the determined camera movement, and may control the surveillance camera based on the camera steering data.

The foregoing description of implementations provides illustration and description, but is not intended to be exhaustive or to limit the invention to the precise form disclosed. Modifications and variations are possible in light of the above teachings or may be acquired from practice of the invention. For example, while a series of blocks have been described with regard to Figs. 9 and 10, the order of the blocks may be modified in other implementations. Further, non-dependent blocks may be performed in parallel.

It will be apparent that aspects, as described above, may be implemented in many different forms of software, firmware, and hardware in the implementations illustrated in the figures. The actual software code or specialized control hardware used to implement these aspects should not be construed as limiting. Thus, the operation and behavior of the aspects were described without reference to the specific software code--it being understood that software and control hardware could be designed to implement the aspects based on the description herein.

No element, block, or instruction used in the present application should be construed as critical or essential to the invention unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A method, comprising:
capturing, with a user device, video that provides an indication of user device motion;
receiving, by a camera separate from the user device, the video from the user device;
determining, by the camera, movement for the camera based on the user device motion contained within the video; and
operating the camera based on the determined movement for the camera.

2. The method of claim 1, where determining, by the camera, the movement for the camera based on the user device motion, includes:
extracting motion vectors from the video;
analyzing the motion vectors; and
determining movement for the camera based on the analyzed motion vectors.

3. The method of claim 1, further comprising:
generating camera steering data based on the determined movement for the camera; and
operating the camera based on the camera steering data.

4. The method of claim 1, where operating the camera based on the determined movement for the camera comprises one or more of:
performing a zoom operation with the camera, or
moving the camera in a direction provided by the determined camera movement.

5. The method of claim 1, further comprising:
determining, based on the video, if a zoom operation is performed by the user device;
calculating zoom direction and magnitude if a zoom operation is performed by the user device; and
determining movement for the camera based on the calculated zoom direction and magnitude.

6. The method of claim 5, further comprising:
generating camera steering data based on the determined movement for the camera; and
operating the camera based on the camera steering data.

7. A system, comprising a user device and a camera, separate from the user device, wherein the camera includes means adapted to:
receive video from the user device, where the user device includes means adapted to capture a video that provides an indication of user device motion,
the camera further includes means adapted to :
determine the user device motion based on the received video,
determine movement for the camera based on the user device motion, and
operate based on the determined movement for the camera.

8. The system of claim 7, wherein the camera further includes means adapted to:
extract motion vectors from the video;
analyze the motion vectors; and
determine the movement for the camera based on the analyzed motion vectors.

9. The system of claim 7, wherein the camera further includes means adapted to:
generate camera steering data based on the determined movement for the camera, and
operate based on the camera steering data.

10. The system of claim 7, wherein the camera further includes means adapted to :
determine, based on the video, if a zoom operation is performed by the user device;
calculate zoom direction and magnitude if a zoom operation is performed by the user device; and
determine the movement for the camera based on the calculated zoom direction and magnitude.

11. The system of claim 10, wherein the camera further includes means adapted to
generate camera steering data based on the determined movement for the camera, and
operate based on the camera steering data.

12. A system, comprising a user device and a surveillance camera, separate from the user device, wherein
the user device includes means adapted to:
receive video that provides an indication of movement of the user device, and
provide the video to the surveiliance camera,
where the surveillance camera includes means adapted to:
receive the video from the user device, and
operate based on the indicated user device movement provided by the video.

13. The system of claim 12, wherein the video comprises motion vectors used to determine the movement of the user device.

14. The system of claim 12, wherein the user device further includes means adapted to control movement of the surveillance camera based on the indicated user device movement provided by the video.

15. The system of claim 12, wherein the user device further includes means adapted to detect a zoom operation based on the video.

## Patentansprüche

1. Ein Verfahren, umfassend:
Erfassen mit einem Benutzergerät von Video, das einen Hinweis auf eine Benutzergerätbewegung bereitstellt;
Empfangen durch eine Kamera, getrennt von dem Benutzergerät, des Videos von dem Benutzergerät;
Bestimmen durch die Kamera einer Bewegung für die Kamera auf Grundlage der Benutzergerätbewegung, die in dem Video enthalten ist; und
Betreiben der Kamera auf Grundlage der bestimmten Bewegung für die Kamera.

2. Das Verfahren nach Anspruch 1, wobei ein Bestimmen durch die Kamera der Bewegung für die Kamera auf Grundlage der Benutzergerätbewegung enthält:
Extrahieren von Bewegungsvektoren von dem Video;
Analysieren der Bewegungsvektoren; und
Bestimmen einer Bewegung für die Kamera auf Grundlage der analysierten Bewegungsvektoren.

3. Das Verfahren nach Anspruch 1, ferner umfassend:
Erzeugen von Kamerasteuerdaten auf Grundlage der bestimmten Bewegung für die Kamera; und
Betreiben der Kamera auf Grundlage der Kamerasteuerdaten.

4. Das Verfahren nach Anspruch 1, wobei ein Betreiben der Kamera auf Grundlage der bestimmten Bewegung für die Kamera eines oder mehr umfasst von:
Ausführen eines Zoom-Betriebs mit der Kamera, oder
Bewegen der Kamera in eine Richtung, die bereitgestellt wird durch die bestimmte Kamerabewegung.

5. Das Verfahren nach Anspruch 1, ferner umfassend:
Bestimmen auf Grundlage des Videos, ob ein Zoom-Betrieb ausgeführt wird durch das Benutzergerät;
Berechnen einer Zoom-Richtung und -Größe, falls ein Zoom-Betrieb ausgeführt wird durch das Benutzergerät; und
Bestimmen einer Bewegung für die Kamera auf Grundlage der berechneten Zoom-Richtung und -Größe.

6. Das Verfahren nach Anspruch 5, ferner umfassend:
Erzeugen von Kamerasteuerdaten auf Grundlage der bestimmten Bewegung für die Kamera; und
Betreiben der Kamera auf Grundlage der Kamerasteuerdaten.

7. Ein System, umfassend ein Benutzergerät und eine Kamera, getrennt von dem Benutzergerät, wobei die Kamera enthält Mittel, die ausgebildet sind zum:
Empfangen von Video von dem Benutzergerät, wobei das Benutzergerät Mittel enthält, ausgebildet zum Erfassen eines Videos, das einen Hinweis auf die Benutzergerätbewegung bereitstellt,
die Kamera ferner Mittel enthält, ausgebildet zum:
Bestimmen der Benutzergerätbewegung auf Grundlage des empfangenen Videos,
Bestimmen einer Bewegung für die Kamera auf Grundlage der Benutzergerätbewegung, und
Betreiben auf Grundlage der bestimmten Bewegung für die Kamera.

8. Das System nach Anspruch 7, wobei die Kamera ferner Mittel enthält, ausgebildet zum:
Extrahieren von Bewegungsvektoren von dem Video;
Analysieren der Bewegungsvektoren; und
Bestimmen der Bewegung für die Kamera auf Grundlage der analysierten Bewegungsvektoren.

9. Das System nach Anspruch 7, wobei die Kamera ferner Mittel enthält, ausgebildet zum:
Erzeugen von Kamerasteuerdaten auf Grundlage der bestimmten Bewegung für die Kamera, und
Betreiben auf Grundlage der Kamerasteuerdaten.

10. Das System nach Anspruch 7, wobei die Kamera ferner Mittel enthält, ausgebildet zum:
Bestimmen auf Grundlage des Videos, ob ein zoom-Betrieb ausgeführt wird durch das Benutzergerät;
Berechnen einer Zoom-Richtung und -Größe, falls ein Zoom-Betrieb ausgeführt wird durch das Benutzergerät; und
Bestimmen der Bewegung für die Kamera auf Grundlage der berechneten Zoom-Richtung und -Größe.

11. Das System nach Anspruch 10, wobei die Kamera ferner Mittel enthält, ausgebildet zum
Erzeugen von Kamerasteuerdaten auf Grundlage der bestimmten Bewegung für die Kamera, und
Betreiben auf Grundlage der Kamerasteuerdaten.

12. Das System, umfassend ein Benutzergerät und eine Überwachungskamera, getrennt von dem Benutzergerät, wobei
das Benutzergerät Mittel enthält, ausgebildet zum:
Empfangen von Video, das einen Hinweis auf eine Bewegung des Benutzergeräts bereitstellt, und
Bereitstellen des Videos der Überwachungskamera, wobei die Überwachungskamera Mittel enthält, ausgebildet zum:
Empfangen des Videos von dem Benutzergerät, und
Betreiben auf Grundlage der angezeigten Benutzergerätbewegung, bereitgestellt durch das Video.

13. Das System nach Anspruch 12, wobei das Video Bewegungsvektoren umfasst, verwendet zum Bestimmen der Bewegung des Benutzergeräts.

14. Das System nach Anspruch 12, wobei das Benutzergerät ferner Mittel enthält, ausgebildet zum Steuern einer Bewegung der Überwachungskamera auf Grundlage der gezeigten Benutzergerätbewegung, bereitgestellt durch das Video.

15. Das System nach Anspruch 12, wobei das Benutzergerät ferner Mittel enthält, ausgebildet zum Detektieren eines Zoom-Betriebs auf Grundlage des Videos.

## Revendications

1. Procédé comprenant :
l'acquisition, au moyen d'un dispositif utilisateur, d'une vidéo qui fournit une indication du mouvement du dispositif utilisateur ;
la réception, par une caméra séparée du dispositif utilisateur, de la vidéo en provenance du dispositif utilisateur ;
la détermination, par la caméra, du mouvement de la caméra sur la base du mouvement du dispositif utilisateur contenu dans la vidéo ; et
la mise en fonctionnement de la caméra sur la base du mouvement déterminé pour la caméra.

2. Procédé selon la revendication 1, dans lequel la détermination, par la caméra, du mouvement de la caméra sur la base du mouvement du dispositif utilisateur, comporte :
l'extraction de vecteurs de mouvement de la vidéo ;
l'analyse des vecteurs de mouvement ; et
la détermination du mouvement de la caméra sur la base des vecteurs de mouvement analysés.

3. Procédé selon la revendication 1, comprenant en outre :
la génération de données d'orientation de caméra sur la base du mouvement déterminé pour la caméra ; et
la mise en fonctionnement de la caméra sur la base des données d'orientation de la caméra.

4. Procédé selon la revendication 1, dans lequel la mise en fonctionnement de la caméra sur la base du mouvement déterminé pour la caméra comprend un ou plusieurs :
de l'exécution d'une opération de variation de focale avec la caméra, ou
du déplacement de la caméra dans une direction fournie par le mouvement de caméra déterminé.

5. Procédé selon la revendication 1, comprenant en outre :
la détermination, sur la base de la vidéo, du fait de savoir si une opération de variation de focale est effectuée par le dispositif utilisateur ;
le calcul de la direction et du niveau de variation de focale si une opération de variation de focale est effectuée par le dispositif utilisateur ; et
la détermination du mouvement de la caméra sur la base de la direction et du grossissement de variation de focale calculé.

6. Procédé selon la revendication 5, comprenant en outre :
la génération de données d'orientation de caméra sur la base du mouvement déterminé pour la caméra ; et
la mise en fonctionnement de la caméra sur la base des données d'orientation de caméra.

7. Système comprenant un dispositif utilisateur et une caméra, séparée du dispositif utilisateur, dans lequel la caméra comprend des moyens adaptés à :
la réception d'une vidéo du dispositif utilisateur, dans lequel le dispositif utilisateur comprend des moyens adaptés à l'acquisition d'une vidéo qui fournit une indication du mouvement du dispositif utilisateur, la caméra comprenant en outre des moyens adaptés à :
la détermination du mouvement du dispositif utilisateur sur la base de la vidéo reçue,
la détermination du mouvement de la caméra sur la base du mouvement du dispositif utilisateur, et
la mise en fonctionnement sur la base du mouvement déterminé pour la caméra.

8. Système selon la revendication 7, dans lequel la caméra comprend en outre des moyens adaptés à :
l'extraction de vecteurs de mouvement de la vidéo ;
l'analyse des vecteurs de mouvement ; et
la détermination du mouvement de la caméra sur la base des vecteurs de mouvement analysés.

9. Système selon la revendication 7, dans lequel la caméra comprend en outre des moyens adaptés à :
la génération de données d'orientation de caméra sur la base du mouvement déterminé pour la caméra ; et
la mise en fonctionnement sur la base des données d'orientation de caméra.

10. Système selon la revendication 7, dans lequel la caméra comprend en outre des moyens adaptés à :
la détermination, sur la base de la vidéo, du fait de savoir si une opération de variation de focale est effectuée par le dispositif utilisateur ;
le calcul de la direction et du grossissement de variation de focale si une opération de variation de focale est effectuée par le dispositif utilisateur ; et
la détermination du mouvement de la caméra sur la base de la direction et du grossissement de variation de focale calculée.

11. Système selon la revendication 10, dans lequel la caméra comprend en outre des moyens adaptés à :
la génération de données d'orientation de caméra sur la base du mouvement déterminé pour la caméra ; et
la mise en fonctionnement sur la base des données d'orientation de caméra.

12. Système comprenant un dispositif utilisateur et une caméra de surveillance, séparée du dispositif utilisateur, dans lequel le dispositif utilisateur comprend des moyens adaptés à :
la réception d'une vidéo qui fournit une indication du mouvement du dispositif utilisateur, et
la fourniture de la vidéo à une caméra de surveillance, la caméra de surveillance comprenant des moyens adaptés à :
la réception de la vidéo du dispositif utilisateur ; et
la mise en fonctionnement sur la base du mouvement du dispositif utilisateur indiqué et fourni par la vidéo.

13. Système selon la revendication 12, dans lequel la vidéo comprend des vecteurs de mouvement utilisés pour déterminer le mouvement du dispositif utilisateur.

14. Système selon la revendication 12, dans lequel le dispositif utilisateur comprend en outre des moyens adaptés à la commande du mouvement de la caméra de surveillance sur la base du mouvement du dispositif utilisateur indiqué et fourni par la vidéo.

15. Système selon la revendication 12, dans lequel le dispositif utilisateur comprend en outre des moyens adaptés à la détection d'une opération de variation de focale sur la base de la vidéo.
